(19) **Europäisches Patentamt**
**European Patent Office**
**Office européen des brevets**

(11) **EP 3 889 847 A1**

(12) **EUROPEAN PATENT APPLICATION**

(43) Date of publication:
**06.10.2021 Bulletin 2021/40**

(51) Int Cl.:
***G06N 3/08*** (2006.01)

(21) Application number: **20167647.5**

(22) Date of filing: **02.04.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bayerische Motoren Werke
Aktiengesellschaft
80809 München (DE)**

(72) Inventors:
• **Hu, Wangsu**
**Chicago, Illinois 60661 (US)**
• **Tian, Jilei**
**Chicago, Illinois 60601 (US)**

(54) **A METHOD, A DEVICE AND A COMPUTER PROGRAM FOR LEARNING A FIRST TASK IN A FIRST DOMAIN**

(57)     An embodiment of a method (800) for learning a first task in a first domain comprises receiving (801) a first raw data of the first domain and a second raw data of a second domain characterizing a behavior of a user. The method further comprises determining (802) a pre-trained embedding using the first raw data and the second raw data and using (803) the pre-trained embedding for learning a first fine-tuned model to perform the first task.

Receiving a first raw data of the first domain and a second raw data of a second domain characterizing a behavior of a user. — 801

800

Determining a pre-trained embedding using the first raw data and the second raw data — 802

Using the pre-trained embedding for learning a first fine-tuned model to perform the first task. — 803

Fig. 8

EP 3 889 847 A1

## Description

### Field

Embodiments of the invention relate to a method, a device and a computer program for learning a first task in a first domain.

### Background

Profiling describes a process to learn more about a person by processing its personal data. For example, profiling can be used in criminal investigation, employment services or in general to perform a task such as making an appropriate recommendation for the person. Exemplarily, a user profile can be used to classify or predict a characteristic, action or interest of the person based on a registered input or an individual historic data. Historic data of the person can be automatically collected and stored, e.g. while the person is using a device comprising digital features such as a computer, a mobile phone, a wearable and an Internet of Things (IoT) device or a car. Depending on the source or type of collected data, it can refer to a specific domain.

The most common approach to model a profile is based on one specific domain information to be applied for a given task. For holistic user modelling it is suitable to consider multiple domains as a user can be described by multiple characteristics. However, different single-domain models each using different single domains bring a single domain-specific knowledge, respectively. Thus, the approach of several single-domain models lacks the ability to generate a holistic understanding of the user. Moreover, the holistic characteristic of a human is naturally heterogeneous. So far, it is not considered that the different characteristics of the user might impact each other.

A good representation of the user also depends on the provided dataset for modelling. Prior arts might have problems to deal with datasets which are limited in their amount or cannot be excessively collected for a specific domain. As a consequence, the performance for solving the given task corresponding to a domain comprising little data is often poor and not satisfying.

Thus, there appears to be a demand to improve a method for learning a task by using data corresponding to multiple domains.

### Summary

This objective is achieved by the subject matter of any of the independent claims.

An embodiment of a method for learning a first task in a first domain comprises receiving a first raw data of the first domain and a second raw data of a second domain characterizing a behavior of a user. The method further comprises determining a pre-trained embedding using the first raw data and the second raw data and using the pre-trained embedding for learning a first fine-tuned model to perform the first task. Exemplarily, the first raw data and the second raw data can be collected and stored automatically by a device a person is using regularly. Such a device is e.g. a car or smartphone comprising technical features for data collection or data processing. Each raw data corresponds to a domain depending on the type or semantic meaning of the collected data. The embedding of raw data can be performed by mapping a discrete categorial variable of the collected data into a vector comprising continuous numbers. The embedding can be learnt during a separate supervised pre-training process and can be further used as an input for the fine-tuned model. The result of applying transfer learning from the pre-trained model to the fine-tuned model is a better performance of the task such as behavior prediction of the user.

According to some embodiments the first raw data comprises a set of interaction information, content information and context information corresponding to the first domain. Further, the second raw data comprises a set of interaction information, content information and context information corresponding to the second domain. The behavior of the user can be described by combining an interaction, content and context information. For example the behavior of the user may be "purchasing a product at 10am in a shop" comprising "purchase" as the user interaction, "product" as the content and "10am" and "in a shop" as the context information having two context elements. As different behaviors or activities can be executed by the user during a particular time, each interaction, content and context information may represent one item in a set of information, respectively. Interaction, content and context can be used to simplify modelling of the behavior of the user.

According to some embodiments the method further comprises generating a first behavior record by using the interaction information, content information and context information of the set corresponding to the first domain. The method further comprises generating a second behavior record by using the interaction information, content information and context information of the set corresponding to the second domain and generating multi-domain behavior by using the first behavior record and second behavior record. User behavior may be defined as taking certain action on certain content at the given context. For example, the behavior record can be described by a vector composed of the interaction, content and context information to describe an action carried out by the user. The multi-domain behavior can be generated e.g. by combining behavior records or a sequence of behavior records corresponding to different domains to a unified cross-domain matrix. By generating the cross-domain matrix interactions between different domains can be considered. This approach may reveal new information obtained from a holistic understanding of the user. The new information can be beneficial for the performance for the first task to be learnt in the fine-tuned model.

According to some embodiments the method further comprises learning the pre-trained embedding for the first raw data and the second raw data by applying self-attention mechanism. Self-attention mechanism can be used as calculation method in machine learning e.g. to learn embedding for a given input. Self-attention mechanism can be applied to model dependencies crossing different domains such as the first and second domain. After learning embedding comprising personal features of the user, it can be further used as input features for the fine-tuned model.

According to some embodiments the first domain corresponds to trip behavior and the second domain corresponds to app usage behavior of the user. For example, the first raw data is user location tracking data corresponding to user trip pattern and the second raw data is app usage data corresponding to a user clicking pattern. Location tracking data can be GPS coordinates e.g. automatically collected by a smartphone, car or smartwatch of the user and the app usage data can be log-files extracted from the smartphone, tablet or computer of the user. The performance for the first task such as behavior prediction can be optimized under consideration of both domains.

According to some embodiments the first task is to predict a destination location of next trip for the user. For example the fine-tuned model e.g. comprising a neural network receives particular contextual input information based on the learnt embedding in the pre-trained model. By using the contextual input information, such as "day of week" and "hour of day", the fine-tuned model is able to make an improved prediction for the upcoming destination location the user will most likely visit for the given context.

According to some embodiments the method further comprises using the pre-trained embedding for learning a second fine-tuned model to perform a second task in the second domain wherein the second task is to predict a tab the user will click most frequently. Pre-trained embedding can be further used to perform the second task such as app usage prediction. To perform the second task a second fine-tuned model can be required such as another neural network comprising modified layers to be trained.

An embodiment of a device for learning a first task in a first domain comprises an input interface configured to receive first raw data of the first domain and second raw data of a second domain characterizing a behavior of a user. The device further comprises a circuit configured neural network implementing logic configured to determine a pre-trained embedding using the first raw data and the second raw data. Further, the circuit is configured to use the pre-trained embedding for learning a first fine-tuned model to perform the first task. Exemplarily, the first raw data and the second raw data can be collected and stored automatically by a device a person is using regularly. Such a device is e.g. a car or smartphone comprising technical features for data collection or data processing. Each raw data corresponds to a domain depending on the type or semantic meaning of the collected data. The embedding of raw data can be performed by mapping a discrete categorial variable of the collected data into a vector comprising continuous numbers. The embedding can be learnt during a separate supervised pre-training process and can be further used as an input for the fine-tuned model. The result of applying transfer learning from the pre-trained model to the fine-tuned model is a better performance of the task such as behavior prediction of the user.

According to some embodiments the first raw data comprises a set of interaction information, content information and context information corresponding to the first domain. Further, the second raw data comprises a set of interaction information, content information and context information corresponding to the second domain. The behavior of the user can be described by combining an interaction, content and context information. For example the behavior of the user may be "purchasing a product at 10am in a shop" comprising "purchase" as the user interaction, "product" as the content and "10am" and "in a shop" as the context information having two context elements. As different behaviors or activities can be executed by the user during a particular time, each interaction, content and context information may represent one item in a set of information, respectively. Interaction, content and context can be used to simplify a modelling of the behavior of the user.

According to some embodiments the circuit configured neural network implementing logic is further configured to generate a first behavior record by using the interaction information, content information and context information of the set corresponding to the first domain. The circuit configured neural network implementing logic is further configured to generate a second behavior record by using the interaction information, content information and context information of the set corresponding to the second domain. The circuit is further configured to generate multi-domain behavior by using the first behavior record and second behavior record. User behavior may be defined as taking certain action on certain content at the given context. For example, the behavior record can be described by a vector composed of the interaction, content and context information to describe an action carried out by the user. The multi-domain behavior can be generated e.g. by combining behavior records or a sequence of behavior records corresponding to different domains to a unified cross-domain matrix. By generating the cross-domain matrix interactions between different domains can be considered. This approach may reveal new information obtained from a holistic understanding of the user. The new information can be beneficial for the performance for the first task to be learnt in the fine-tuned model.

According to some embodiments the circuit configured neural network implementing logic is further configured to apply self-attention mechanism to learn the pre-trained embedding for the first raw data and the second raw data. Self-attention mechanism can be used as calculation method in machine learning e.g. to learn embedding for a given input. Self-attention mechanism can be applied to model dependencies crossing different domains such as the first and second domain. After learning embedding comprising personal features of the user, it can be further used as input features for the fine-tuned model.

According to some embodiments the first domain corresponds to trip behavior and the second domain corresponds to app usage behavior of the user. For example, the first raw data is user location tracking data corresponding to user trip pattern and the second raw data is app usage data corresponding to a user clicking pattern. Location tracking data can be GPS coordinates e.g. automatically collected by a smartphone, car or smartwatch of the user and the app usage data can be log-files extracted from the smartphone, tablet or computer of the user. The performance for the first task such as behavior prediction can be optimized under consideration of both domains.

According to some embodiments the first task is to predict a destination location of next trip for the user. For example the fine-tuned model e.g. comprising a neural network receives particular contextual input information based on the learnt embedding in the pre-trained model. By using the contextual input information, such as "day of week" and "hour of day" the fine-tuned model is able to make an improved prediction for the upcoming destination location the user will most likely visit for the given context.

According to some embodiments the circuit configured neural network implementing logic is further configured to use the pre-trained embedding for learning a second fine-tuned model to perform a second task in the second domain. Further, the second task is to predict a tab the user will click most frequently. Pre-trained embedding can be further used to perform the second task such as app usage prediction. To perform the second task a second fine-tuned model can be required such as another neural network comprising modified layers to be trained.

An embodiment of a computer program having program code for, when executed on a programmable processor, performs a method according to the previously described method for learning a first task. The computer program provides a program code with the prescribed method which can be implemented in a software of an arbitrary apparatus. Exemplarily, the arbitrary apparatus may comprise a software using a neural network as a pre-trained model with learnt embeddings and another neural network as a fine-tuned model to perform the first or the second task.

**Brief description of the Figures**

Some examples of methods and/or devices will be described in the following by way of example only, and with reference to the accompanying figures, in which

Fig. 1 illustrates an embodiment of a device for learning a first task in a first domain;

Fig. 2 illustrates an example for applying transfer learning;

Fig. 3 illustrates an example for generating a behavior record;

Fig. 4 illustrates an example for generating a multi-domain behavior;

Fig. 5 illustrates an example of a pre-trained embedding;

Fig. 6 illustrates an example of a fine-tuned model using a pre-trained embedding to perform a task;

Fig. 7 illustrates a table comprising exemplary results regarding performances for two given tasks; and

Fig. 8 illustrates a flow chart of an embodiment of a method for learning a first task in a first domain.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

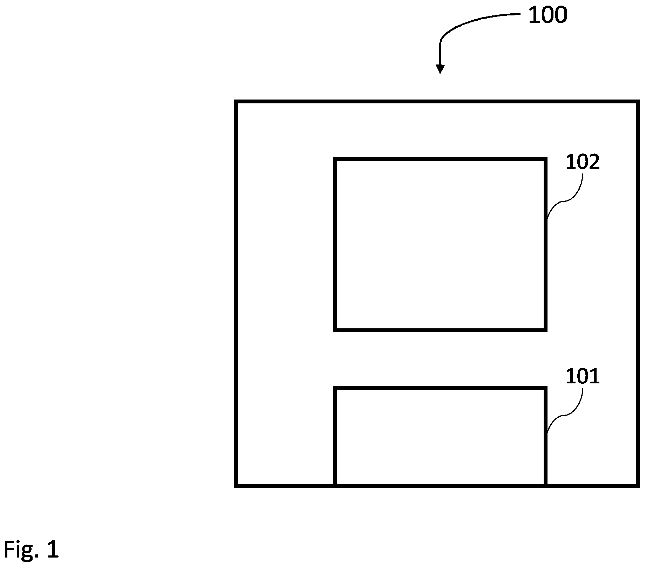

Fig. 1 illustrates an embodiment of a device 100 for learning a first task in a first domain comprising an input interface 101 and a circuit configured neural network implementing logic 102. The input interface 101 is configured to receive first raw data of the first domain and second raw data of a second domain characterizing a behavior of a user. Collected raw data provides a basis for modelling the behavior of the user. Raw data can be extracted e.g. from historic data. Production of historic data for behavior modelling can be triggered by the user e.g. while carrying out an activity such as driving to work, making a phone call, listening to music or taking a picture. Historic data can be generated either by using e.g. an electronic device actively during the activity or e.g. carrying the electronic device passively while carrying out the activity such as tracking sleeping behavior while carrying a smartwatch. This allows to collect historic data automatically used to describe the behavior of the user. Historic data can be for example log files comprising the position of the user or a set of frequently listened music titles.

Raw data can be assigned to different domains e.g. depending on the type or semantic meaning of the collected data. For example raw data using historic data comprising position coordinates of a user refer to trip behavior and raw data using historic data comprising a list of music titles refer to entertainment behavior of a user.

In the embodiment the circuit configured neural network implementing logic 102 is configured to determine a pre-trained embedding using the first raw data and the second raw data. The embedding can be described as representation learning mapping e.g. discrete categorial variables to a vector of continuous numbers. Embedding allows dealing with numbers while preserving the semantic meaning of the categorial variables as the semantic distance or similarity between the variables are encoded in the vectors. Embedding can be trained in a data-driven framework to preserve the semantic meaning of e.g. two locations, two users, two words, two sentences or two timestamps. Embedding can be learnt and computed in a separate pre-trained model apart from a model to perform the first task.

In the embodiment the circuit is further configured to use the pre-trained embedding for a first fine-tuned model to perform the first task. The pre-trained embedding representing the behavior of the user can be extracted and transferred to the first fine-tuned model. This transfer learning process can improve the performance for the first task significantly. At the same time, the computation to perform the first task in the fine-tuned model can remain of low complexity. In contrast to the pre-trained model providing embedding, the fine-tuned model can be trained with less data. Despite of lightweight training of the fine-tuned model the performance for the first task is still of good quality due to transfer learning.

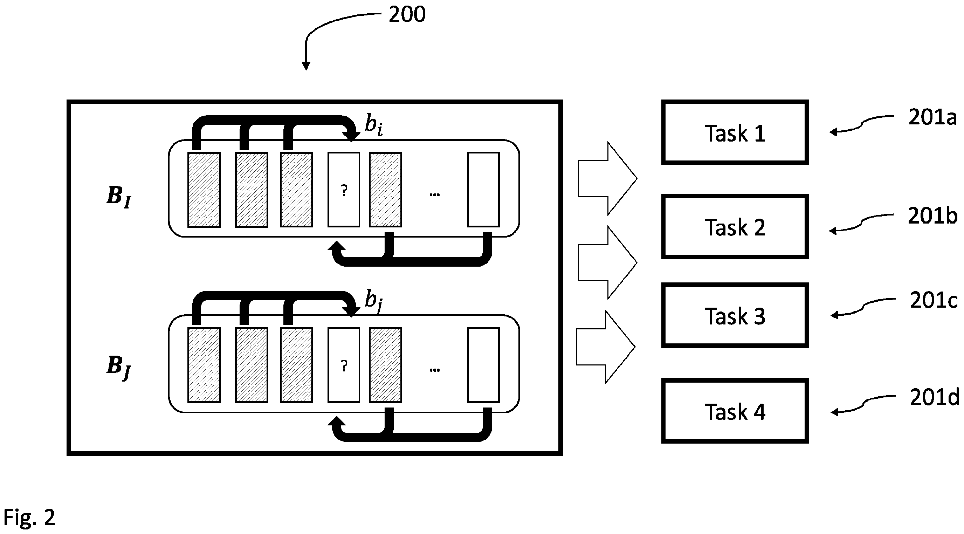

Fig. 2 shows an example for applying transfer learning from a pre-trained model 200 to several fine-tuned models 201a-d each optimized to perform different tasks labeled with "task 1" until "task 4". For example, the task may be a prediction problem, such as destination prediction, app usage prediction, prediction corresponding to entertainment e.g. movies or music, bed time prediction etc. The good performance for the tasks in the fine-tuned model 201a-d is based on a good embedding learnt in pre-trained model 200. The pre-trained model 200 comprises behavior records labelled with a letter "$b_i$" in Fig. 2. The behavior records $b_i$ can be summarized in a set B that each corresponding to a common domain. Exemplarily, a domain corresponds to trip behavior, smartphone usage behavior, telephone behavior, sleeping behavior etc. The pre-trained model 200 can consider the dependencies between the behavior records $b_i$ of different domains. The consideration of behaviors B corresponding to multiple domains allows a holistic understanding of the user.

For example, the first raw data corresponding to a sleeping behavior comprises bedtimes of a user tracked over a one-year period. The second raw data corresponding to entertainment behavior comprises music the user listened during the same period of time. Holistic consideration of both domains may reveal that the user is used to listen to music with a particular beat when it is bedtime. This insight can be utilized e.g. to offer personalized service for the user such as offering new music titles with the preferred beat when the user is going to bed. The insight can be also used to predict the behavior of the user when he is going to bed. The better the user behavior is understood and modelled the better the task such as prediction or user segmentation can be performed. Hence, extracting valuable embeddings from the pre-trained model 200 can optimize the tasks computed by the fine-tuned model 201a-d.

In the following the pre-trained embedding is further discussed by means of an example. The method is not restricted to the subsequent description serving only for better understanding of the method. According to some embodiments a first raw data comprises a set of interaction information, content information and context information corresponding to a first domain. Further, the second raw data comprises a set of interaction information, content information and context information corresponding to the second domain. To describe a behavior of a user sufficiently an activity of the user is considered in more detail and broken down into several items. For example, the activity can be "drive to a destination for a given date, time, location" or "purchase a product for a given date, time, location". In the example, the item for interaction is drive or purchase. Other interactions can be departure, arrive, call, listen etc. Interaction items can be summarized in an interaction set $T=\{I_1, I_2,..., I_Q\}$, where $I_n(1 \leq n \leq Q)$ denotes a kind of user interaction. Content $O=\{O_1, O_2,..., O_K\}$ is a set of items that user interaction is applied on where $O_n(1 \leq n \leq K)$ represents a content such as the product, the given date, time or location. Given a contextual feature set $F=\{f_1, f_2,..., f_P\}$, a context $C_i$ is a group of contextual feature-value pairs, i.e., $C_i=\{(x_1: v_1);(x_2: v_2),...,(x_L: v_L)\}$ where $x_j \in F$ and $v_n$ is the value for $xn(1 \leq n \leq L)$. A user behavior can be defined as taking a certain action on a certain content at a given context. According to some embodiments the method comprises generating a first behavior record by using the interaction information, content information and context information of the set corresponding to the first domain. The method further comprises generating a second behavior record by using the interaction information, content information and context information of the set corresponding to the second domain. For example, the user behavior record can be described by $b_i = <I_i, O_i, C_i>$ using an interaction information, content information and context information corresponding to a common domain such as trip behavior. Several behavior records $b_i$ can be summarized in a sequence ordered by timestamps such as in a user behavior $B = (b_1 b_2... ... b_T)_t$. User modelling can be learnt by analyzing a pattern of the user behavior B.

To be able to deal with the described items comprising interaction I, content O and context C embedding has to be learnt mapping each item into e.g. an embedding vector comprising real numbers. A dimension H of the embedding vector can be determined from a pre-defined feature size. The embedding can be learnt separately in a pre-trained model while preserving the semantic meaning of the input raw data and enabling a quantitative analysis of the users interaction, content and context.

Hence, for a given interaction set $\{I_1, I_2,..., I_Q\}$ with Q items, content set $\{O_1, O_2,..., O_K\}$ with K items and context set $\{C_1, C_2,..., C_P\}$ with P items, three embedding matrices E can be generated. The embedding matrix $E(\{I\})$ comprises Q embedding vectors of dimension H using the interaction information. The embedding matrix $E(\{O\})$ comprises K embedding vectors of dimension H using the content information. The embedding matrix $E(\{C\})$ comprises P embedding vectors of dimension H using the context information. For example the embedding matrices E can be modeled as follows:

$$E(\{I\})=[[I_{1,1}, I_{1,2}, ..., I_{1,H}], ..., [I_{Q,1}, I_{Q,2}, ..., I_{Q,H}]]$$

$$E(\{O\})=[[O_{1,1}, O_{1,2}, ..., O_{1,H}], ..., [O_{K,1}, O_{K,2}, ..., O_{K,H}]]$$

$$E(\{C\})=[[C_{1,1}, C_{1,2}, ..., C_{1,H}], ..., [C_{P,1}, C_{P,2}, ..., C_{P,H}]]$$

To generate the behavior record b a feature embedding layer can be constructed referring to an particular index of interaction embedding I, content embedding O, and context embedding C, respectively. For example, the tuple (q, k, p) comprises indices describing the lookup index of user interaction I, content O and context C, respectively. The feature embedding layer can be represented by a (H, 3)-size matrix where each column comprises a (1, H)-size embedding vector extracted from different embedding matrices E based on the lookup index q, k and p.

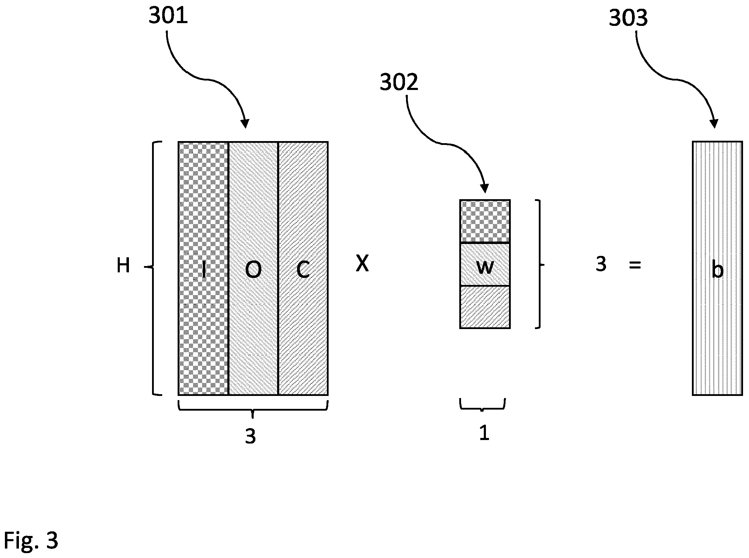

Fig. 3 shows an example for generating a behavior record 303, labeled as "b" by using a feature embedding layer 301, comprising I, O and C, and a weight 302, labeled as "w". In the illustrated example one embedding for content and context is used. In other examples also multiple context and content may be used. For example, the behavior record 303 can be constructed by applying linear transformation:

$$b = \text{concatenate}_{axis=1} (E(I_q), E(O_k), E(C_p)) \times weight + bias$$

The embedding vectors $E(I_q), E(O_k)$ and $E(C_p)$ for interaction, content and context referring to the lookup indices q, k and p can be combined by the operation concatenate$_{axis=1}$() along a axis 1 generating a (H,3)-size matrix. The linear transformation parameters weight 302 and bias can be trained. Applying linear transformation by using the embedding vectors E enables behavior modelling corresponding to a specific domain. According to the calculation for the first behavior record 303 using the lookup indices q, k and p corresponding to the first domain, a second behavior record corresponding to the second domain can be constructed. To be able to understand the behavior of the user across several domains multi-domain behavior embedding is considered and described in the following.

According to some embodiments the method further comprises generating multi-domain behavior by using a first behavior record and a second behavior record. The first behavior record and a second behavior record may be separately generated through behavior modelling according to the description referring to Fig. 3. The multi-domain behavior record can be modeled by concatenating the first behavior record and the second behavior record to e.g. a multi-domain behavior matrix B.

Generally, the behavior of the user is more complex as the user carries out several activities during a specific period of time. To better describe the behavior of the user, a sequence of behavior records is considered. For example, a user may comprise $T = \Sigma_i T_i$ number of behavior records in total. Each behavior record can be summarized according to its specific domain. Hence, the behavior of the user corresponding to a specific domain may be described by a sequence of $T_i$ number of behavior records:

$B_i = (b_{1,1}, b_{1,2}, ..., b_{1,T_i})$

Concatenating the domain-specific behavior records b along a axis $t \in T$ can generate the matrix $B_i$ of size $(H, T_i)$.

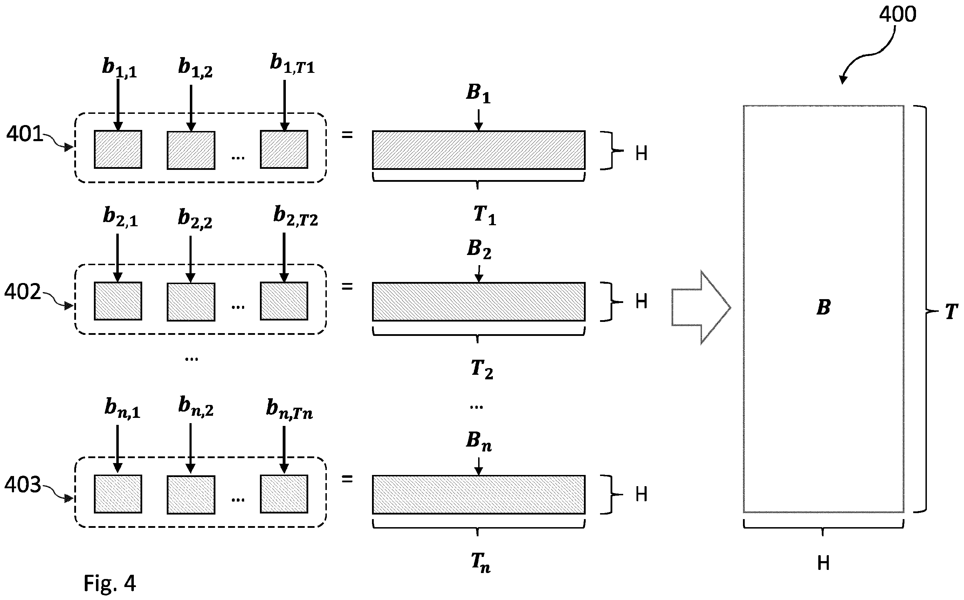

Fig. 4 illustrates an example for generating a multi-domain behavior 400 representing e.g. a (T, H) matrix with T numbers of behavior records b used for modelling the behavior of the user. For example, the behavior $B_1$ comprises $T_1$ behavior records $b_{1,1}, b_{1,2}$ etc. each corresponding to the first domain 401 and the behavior $B_2$ comprises $T_2$ behavior records $b_{2,1}, b_{2,2}$ etc. each corresponding to the second domain 402. As the method uses at least two domains 401-402, also more than two domains can be considered such as behavior $B_n$ comprising $T_n$ behavior records $b_{n,1}, b_{n,2}$ etc. The multi-domain behavior B can be modelled by concatenating the first domain-specific behavior $B_1$ along a first axis, the second domain-specific behavior $B_2$ along a second axis and the n-th domain-specific behavior $B_n$ along a n-th axis. The result may be a (T, H)-matrix comprising several behavior records b of the user corresponding to n domains 401-403 in the illustrated example.

According to some embodiments the method further comprises learning the pre-trained embedding for the first raw data and the second raw data by applying self-attention mechanism. Self-attention can be a useful tool to model dependencies between different domains. The impact across the domains can be modelled by using the multi-domain behavior matrix B, exemplarily illustrated in Fig. 4. The self-attention mechanism uses three representations called query Q, key K and value V. The attention-mechanism calculates attention scores f according to the following equation using the dot product of the query with the key:

$$f(Q, K_i) = Q^\top K_i$$

The score can describe a dependency between several elements from a sequential input. The score can be calculated by taking the dot product of the query representation with the key representation of the respective element i from the sequential input to be scored.

Each result can be passed through a softmax operation deriving the softmax scores $a_i$:

$$a_i = softmax\big(f(Q, K_i)\big) = \frac{\exp(f(Q, K_i))}{\sum_j \exp(f(Q, K_j))}$$

The softmax operation normalizes the scores f. This means, that all softmax scores $a_i$ become positive and sum up to 1. The softmax score can determine how much one element is expressed by the respective element. Hence, the softmax score comprising representations of the same element may have the highest value.

The next step in self-attention mechanism is to multiply each value representation V by the softmax scores $a_i$ generating weighted values. By this operation, a focus on particular elements can be set, whereas other elements of less importance can be drown out such as by multiplying them by small numbers approaching to zero. The weighted values can be summed up to an output A representing the self-attention layer:

$$A(Q, K, V) = \sum_i a_i V_i$$

For learning the pre-trained embedding for user behavior, query Q, key K and value V can be set as the multi-domain behavior matrix B, respectively. The index i represents a number of multi-head attention. The output A representing the self-attention layer can be of the same size TxH as the used multi-domain behavior matrix B. The self-attention layer reflects the relation between the elements of the multi-domain behavior matrix B. Hence, the output A represents personal feature used for supervised training for pre-train tasks which can be designed to be a self-prediction problem. Exemplarily, for a given domain set $N=\{1, 2, 3, 4,.., n\}$, the outputs can be $A_n=A_{1...i}$ where i corresponds to domain $n$. To optimize the training process, the self-prediction tasks can be designed. Thus, no label is needed for pre-trained model.

$$b_{i \in n} = f(A_n)$$

The described method uses pre-trained embedding by means of numbers, sets, vectors, matrices etc. The method is not restricted to the discussed type of modeling and can apply other approaches which can be suitable for modelling such as tensors or arbitrary sets of input elements. Sets, vectors, matrices, tensors can be constructed by concatenating along other axes, considering different dimensions, considering different sequences, using other operations or using other or additional training parameters.

The method can be executed by applying machine learning using neural networks or other calculation models for processing data suitable for the given context. Neural networks can be of different type comprising other types or arrangements of layers than described or illustrated in the embodiments or examples. Pre-trained embedding can be learnt using other mechanism apart from self-attention.

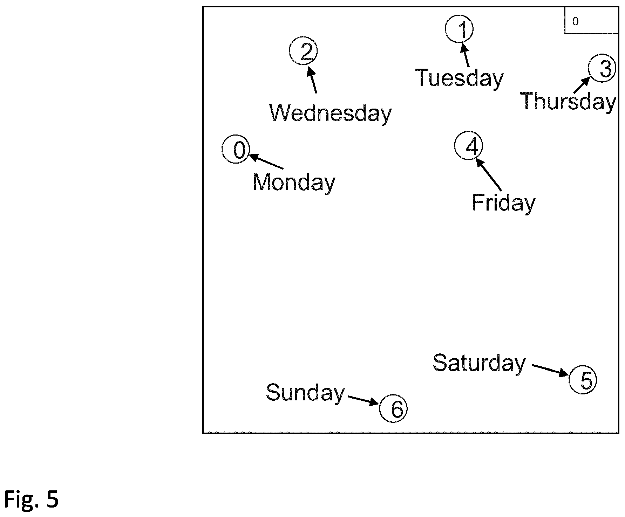

For better understanding of pre-trained embedding, a day-of-week embedding is shown in Fig. 5 as an example. Visualizing embedding was possible due to application of principle dimension analysis reducing the dimension from 128 to 2 while preserving consistent semantics. In the demonstrated example, the dimension of the embedding matrix B is 7x128 as 7 days per week and 128 embedding dimensions are considered. Fig. 5 shows the distribution of weekdays and weekends. Consistent with the semantic meaning embedding results two clusters comprising the weekdays and the weekend days, respectively. Hence, meaningful embedding can be learnt by using randomized parameters initially and supervised training through a pre-train task e.g. self-prediction, subsequently. The learnt embedding can become significant features for the first task, e.g. behavior prediction in the fine-tuned model.

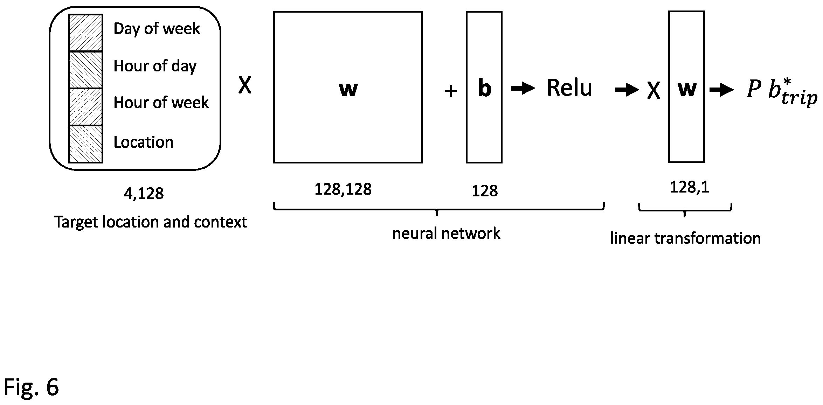

From the supervised training of the pre-trained model the learnt object embeddings can be used for the fine-tuned model to perform e.g. a first task. Fig. 6 illustrates an example of the fine-tuned model using pre-trained embedding to perform the first task. The pre-trained model based on multi-behavior records B can output context embeddings such as location, hour of day, day of week and hour of week. For example, these embeddings can be used as input features for the fine-tuned model to perform e.g. context-aware destination prediction. The destination prediction may be e.g. a possible location I a user might visit regarding certain temporal context information comprising day of week *dow*, hour of day *hod*, and hour of week *how.* For example, the predicted location can be calculated as follows:

$$P(b_{trip}*)=P(I \mid dow, hod, how)$$

The user multi-behavior modeling can be measured from the learnt object embedding extracted as the intermedia output of the pre-trained framework. The object embeddings such as day of week, can be fine-tuned regarding the relative relationship in the semantic space to be consistent with the empirical knowledge. For example, regarding user trip pattern, a typical weekday pattern e.g. Tuesday, might be more similar to another typical weekday pattern e.g. Wednesday, compared to a typical weekend pattern. Such relationship can be measured in a quantitative way such as using a Euclidian distance.

The transfer learning comprises extracting learnt embedding from the pre-trained model and using the extracted embedding for a fine-tuned model. By this means, pre-train training, fine-tuning training and inference process can be separated. The separation can be advantageous as the intensity of training can be adapted to each model. For example, expensive training comprising many data can be used for supervised-training for the pre-trained model e.g. to enrich the semantics for users, content, context and behavior. For example, the pre-trained model is able to measure the similarity e.g. home or office among different users from different places. It is also able to infer the semantics from time, location and trip, all due to the embedding framework.

In contrast to the pre-trained model e.g. using offline training, provision of data for training the fine-tuned model can be restricted. Data sparsity can appear e.g. as training data cannot be collected extensively due to technical limitations or low probability for the occurrence of a condition.

Leveraging personal context from the well trained pre-trained model can optimize the fine-tuned model comprising lightweight training. Learning from user's cross-domain behavior data, a pre-trained embedding algorithmic framework can provide solution supporting broader scenarios with holistic user modeling. Hence, a method comprising a fine-tuned model using a pre-trained embedding is able to better understand the semantic meaning of objects such as context, content and behavior. The framework can provide and improve the contextual and personal user experience, e.g. recommendation, prediction, user segmentation, etc.

According to some embodiments the first domain corresponds to trip behavior and the second domain corresponds to app usage behavior of the user. Two different domain-based datasets can be collected from a user group. Modelling the trip behavior can be achieved by using trip data e.g. by tracking user's trip location. Modelling app usage behavior can be achieved by using app usage data. App usage data e.g. logs the event user clicking tab for different features. As an example, a first raw data using the location tracking data may comprise

<user ID, location_gps_grid_ID, timestamp>.

And a second raw data using the app usage logs may comprise

<user ID, click_tap_label, timestamp>.

Exemplarily, raw data may be collected from 100 users during a 6-month time period, using 1578 locations converted into 200m x 200m grid geographically and considering 3 tab labels. A pre-trained model may use for the first domain a trip behavior $B_{trip}$ and for the second domain a app usage behavior $B_{app}$ as follows:

$$\boldsymbol{B}_{\text{trip}} = \{(visit\ location\ i_0\ at\ time\ t_0),\dots,(visit\ location\ i_T\ at\ time\ t_T)$$

$$\boldsymbol{B}_{\text{app}} = \{(click\ tab\ j_0\ times\ from\ t_0\ to\ t_T),\dots,(click\ tab\ j_K\ times\ from\ t_0\ to\ t_T)\}$$

A pre-train task can be for example self-prediction. The pre-train task for trip behavior can be to predict a $i^{th}$ visit. The pre-train task for app usage behavior can be to predict a $j^{th}$ tab click frequency.

According to some embodiments the first fine-tuned model performs the first task which is to predict a destination location of next trip for the user. For example, the first task of the first fine-tuned model is to predict which location the user will visit at certain time.

According to some embodiments the method further comprises using the pre-trained embedding for learning a second fine-tuned model to perform a second task in the second domain. Further, the second task may be to predict a tab the user will click most frequently. For example, the second task of the second fine-tuned model can be to predict which tab user will click most frequently given his/her app usage history.

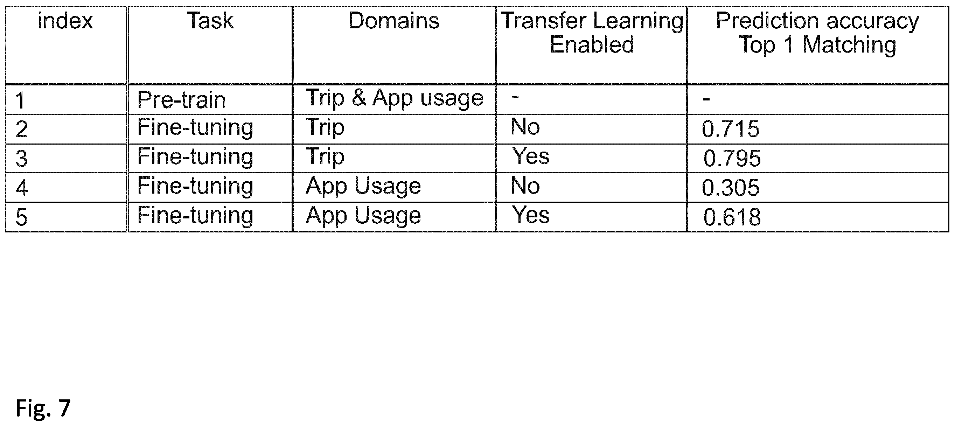

Fig. 7 illustrates a table comprising exemplary results of performances for the first task and the second task with and without application of transfer learning. The performance can be measured by e.g. applying 1-best matching accuracy commonly used in recommendation system in fine-tuning tasks. The prediction accuracy is evaluated on the same test set across all indexed models. Comparing the results referring to the index 2 and index 3, applying transfer learning improved the prediction accuracy from 0.715 to 0.795 for the first task. Comparing the results referring to the index 4 and index 5, applying transfer learning improved the prediction accuracy even more significantly from 0.305 to 0.618 for the second task. Hence, learnt knowledge from pre-trained model does significantly benefit the performance improvement of fine-tuned models.

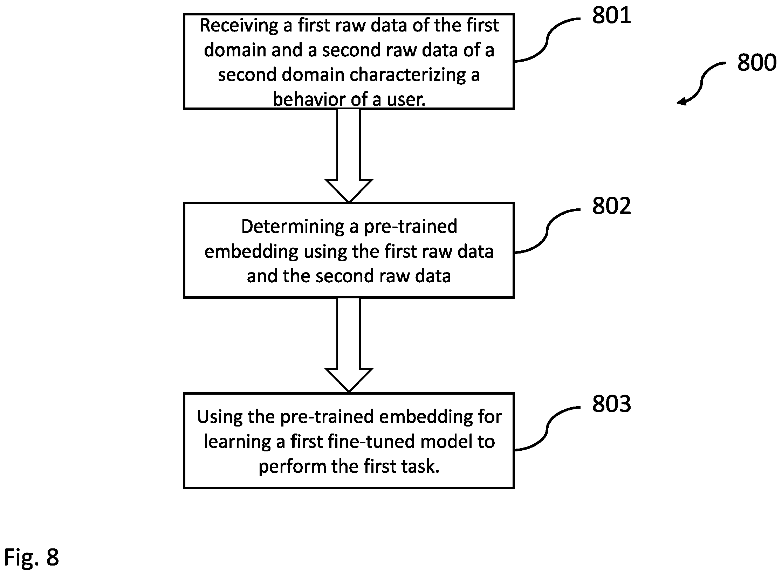

Fig. 8 shows a flow chart for an embodiment of a method 800 for learning a first task in a first domain 800. The method comprises receiving a first raw data of the first domain and a second raw data of a second domain characterizing a behavior of a user 801. The method further comprises determining a pre-trained embedding using the first raw data and the second raw data 802 and using the pre-trained embedding for learning a first fine-tuned model to perform the first task 803.

The described method was exemplarily discussed on trip behavior and app usage behavior. The method can be also applied on other behaviors, services and applications comprising other or broadening scenarios. The method can provide richer information about user's behaviors leveraging from different data sources. The method can jointly model a holistic framework. The method can have a potential to be applied in broader services and applications, such as user segmentation, destination prediction, route recommendation, smart refueling, smart charging, relevant promotion, ads and much more.

Applying the method may improve user behavior semantic modeling enabling a better understanding of user base, e.g. to improve a product, service, user engagement or promote. The method can be used by e.g. automotive companies who actively bring the personal contextual service particularly in the journey management and intelligent personal services. The method can be also used by third party companies that provide map and traffic service, search engines, entertainment services, shopping services, optimization services and other information services using computations for prediction, personalization, recommendation and much more.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**List of reference signs**

| | |
|---|---|
| 100 | Device |
| 101 | Input interface |
| 102 | Circuit configured neural network implementing logic |

| 200 | Pre-trained model |
| 201a-d | Fine-tuned model |
| 301 | Feature embedding layer |
| 302 | Weight |
| 303 | Behavior record |
| 400 | Multi-domain Behavior |
| 401 | First domain |
| 402 | Second domain |
| 403 | n-th domain |
| 800 | Method for learning a first task in a first domain |
| 801 | Receiving a first raw data of the first domain and a second raw data of a second domain characterizing a behavior of a user |
| 802 | Determining a pre-trained embedding using the first raw data and the second raw data |
| 803 | Using the pre-trained embedding for learning a first fine-tuned model to perform the first task. |

**Claims**

1. A method (800) for learning a first task in a first domain (401), comprising:

   receiving (801) a first raw data of the first domain (401) and a second raw data of a second domain (402) characterizing a behavior of a user;
   determining (802) a pre-trained embedding using the first raw data and the second raw data; and
   using (803) the pre-trained embedding for learning a first fine-tuned model (201a) to perform the first task.

2. The method (800) according to claim 1, wherein
   the first raw data comprises a set of interaction information, content information and context information corresponding to the first domain (401); and
   the second raw data comprises a set of interaction information, content information and context information corresponding to the second domain (402).

3. The method (800) according to claim 2, further comprising:

   generating a first behavior record (303) by using the interaction information, content information and context information of the set corresponding to the first domain (401);
   generating a second behavior record (303) by using the interaction information, content information and context information of the set corresponding to the second domain (402); and
   generating multi-domain behavior (400) by using the first behavior record (303) and second behavior record (303).

4. The method (800) according to one of the preceding claims, further comprising:
   learning the pre-trained embedding for the first raw data and the second raw data by applying self-attention mechanism.

5. The method (800) according to one of the preceding claims, wherein
   the first domain (401) corresponds to trip behavior and the second domain (402) corresponds to app usage behavior of the user.

6. The method (800) according to one of the preceding claims, wherein
   the first task is to predict a destination location of next trip for the user.

7. The method (800) according to one of the preceding claims, further comprising:
   using the pre-trained embedding for learning a second fine-tuned model (201b) to perform a second task in the second domain (402); and wherein
   the second task is to predict a tab the user will click most frequently.

8. A device (100) for learning a first task in a first domain (401), comprising:

an input interface (101) configured to receive first raw data of the first domain (401) and second raw data of a second domain (402) characterizing a behavior of a user;

a circuit configured neural network implementing logic (102) configured to determine a pre-trained embedding using the first raw data and the second raw data; and

to use the pre-trained embedding for learning a first fine-tuned model (201a) to perform the first task.

9.  The device (100) according to claim 8, wherein
    the first raw data comprises a set of interaction information, content information and context information corresponding to the first domain (401); and
    the second raw data comprises a set of interaction information, content information and context information corresponding to the second domain (402).

10. The device (100) according to claim 9, wherein
    the circuit configured neural network implementing logic (102) is further configured to generate a first behavior record (303) by using the interaction information, content information and context information of the set corresponding to the first domain (401);
    to generate a second behavior (303) record by using the interaction information, content information and context information of the set corresponding to the second domain (402); and to generate multi-domain behavior (400) by using the first behavior record (303) and second behavior record (303).

11. The device (100) according to one of claims 8 to 10, wherein
    the circuit configured neural network implementing logic (102) is further configured to apply self-attention mechanism to learn the pre-trained embedding for the first raw data and the second raw data.

12. The device (100) according to one of claims 8 to 11, wherein
    the first domain (401) corresponds to trip behavior and the second domain corresponds to app usage behavior of the user.

13. The device (100) according to one of claims 8 to 12, wherein
    the first task is to predict a destination location of next trip for the user.

14. The device (100) according to one of claims 8 to 13, wherein
    the circuit configured neural network implementing logic (102) is further configured to use the pre-trained embedding for learning a second fine-tuned model (201b) to perform a second task in the second domain (402); and
    the second task is to predict a tab the user will click most frequently.

15. A computer program having program code for, when executed on a programmable processor, performing a method (800) according to one of claims 1 to 7.

100

102

101

Fig. 1

Fig. 2

Fig. 3

Fig. 4

EP 3 889 847 A1

**Fig. 5**

4,128
Target location and context

128,128        128

128,1

neural network

linear transformation

Fig. 6

| index | Task | Domains | Transfer Learning Enabled | Prediction accuracy Top 1 Matching |
|---|---|---|---|---|
| 1 | Pre-train | Trip & App usage | - | - |
| 2 | Fine-tuning | Trip | No | 0.715 |
| 3 | Fine-tuning | Trip | Yes | 0.795 |
| 4 | Fine-tuning | App Usage | No | 0.305 |
| 5 | Fine-tuning | App Usage | Yes | 0.618 |

Fig. 7

Receiving a first raw data of the first domain and a second raw data of a second domain characterizing a behavior of a user. — 801

800

Determining a pre-trained embedding using the first raw data and the second raw data — 802

Using the pre-trained embedding for learning a first fine-tuned model to perform the first task. — 803

Fig. 8

Europäisches
Patentamt

European
Patent Office

Office européen
des brevets

# EUROPEAN SEARCH REPORT

Application Number

EP 20 16 7647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHANG ZHOU ET AL: "ATRank: An Attention-Based User Behavior Modeling Framework for Recommendation", ARXIV.ORG, CORNELL UNIVERSITY LIBRARY, 201 OLIN LIBRARY CORNELL UNIVERSITY ITHACA, NY 14853, 17 November 2017 (2017-11-17), XP081289570, * the whole document * | 1-15 | INV. G06N3/08 |
| A | CHAO CHEN ET AL: "Trip2Vec", PERSONAL AND UBIQUITOUS COMPUTING, SPRINGER VERLAG, LONDON, GB, vol. 23, no. 1, 1 February 2019 (2019-02-01), pages 53-66, XP058426123, ISSN: 1617-4909, DOI: 10.1007/S00779-018-1175-9 * abstract * * page 55 - page 58; figures 1,2 * | 6,7,13, 14 | |

TECHNICAL FIELDS SEARCHED (IPC)

G06N
H04N

The present search report has been drawn up for all claims

| Place of search | Date of completion of the search | Examiner |
|---|---|---|
| The Hague | 25 September 2020 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)